# EUROPEAN PATENT APPLICATION

(11) **EP 3 944 677 A1**
(43) Date of publication of application: **26.01.2022**
(21) Application number: 19927505.8
(22) Date of filing: 30.04.2019
(51) Int. Cl.: H04W 52/02

(54) **SMALL ALCOHOL-BASED-FUEL SELF-HEATING VAPORIZATION COMBUSTION DEVICE**

(71) Applicant: GUANGDONG OPPO MOBILE TELECOMMUNICATIONS CORP., LTD., Dongguan, Guangdong 523860 (CN)
(72) Inventor: WANG, Shukun, Dongguan, Guangdong 523860 (CN); SHI, Cong, Dongguan, Guangdong 523860 (CN)
(74) Representative: Taor, Simon Edward William
(86) International application number: PCT/CN2019/085117
(87) International publication number: WO 2020/220239

(57) **Abstract**

Provided in embodiments of the present application are a method and apparatus for controlling a terminal to receive information, and a terminal, the method comprising: a terminal receiving a wake-up configuration parameter sent by a network device; the terminal determining whether to activate the wake-up configuration parameter; and if activating the wake-up configuration parameter, the terminal monitoring a first PDCCH having a wake-up function according to the wake-up configuration parameter.

## Description

### BACKGROUND

### FIELD

The embodiments of the present application relate to the field of mobile communication technology, and more specifically, to a method and apparatus for controlling a terminal to receive information, and a terminal.

### BACKGROUND

In R15 long term evolution (LTE) narrow band internet of things (NB-IOT) systems, in order to save energy on NB-IOT terminals, a wake up signal (WUS) technology is introduced. WUS technology can be applied to save energy in a paging reception process of the NB-IOT terminals.

In R16 new radio (NR) systems, a similar mechanism of WUS is also introduced to achieve an energy saving of connected terminals. The difference between WUS in NR and WUS in LTE is that WUS in NR is implemented through a physical downlink control channel (PDCCH) having a wake-up function. In NR, how a terminal receives the PDCCH having the wake-up function needs to be clarified, and unreasonable reception will increase a power consumption of the terminal.

### SUMMARY

The embodiments of the present application provide a method and apparatus for controlling a terminal to receive information, a terminal, and a network device.

The embodiments of the present application provide a method for controlling a terminal to receive information, comprising: a terminal receiving a wake-up configuration parameter sent by a network device; the terminal determining whether to activate the wake-up configuration parameter; and if the terminal activates the wake-up configuration parameter, the terminal monitors a first PDCCH having a wake-up function according to the wake-up configuration parameter.

The embodiments of the present application provide an apparatus for controlling a terminal to receive information, comprising: a first receiver configured to receive a wake-up configuration parameter sent by a network device; an activation unit configured to determine whether to activate the wake-up configuration parameter; and a monitor, if the activation unit activates the wake-up configuration parameter, the monitor monitors a first PDCCH having a wake-up function according to the wake-up configuration parameter.

The embodiments of the present application provide a terminal including a processor and a memory. The memory is used for storing a computer program, and the processor is configured to call and run the computer program stored in the memory to perform the method for controlling the terminal to receive the information.

The embodiments of the present application provide a network device including a processor and a memory. The memory is used for storing a computer program, and the processor is configured to call and run the computer program stored in the memory to perform the method for controlling the terminal to receive the information.

The embodiments of the present application provide a chip to implement the method for controlling the terminal to receive the information.

Specifically, the chip includes a processor configured to call and run a computer program from a memory to cause the device installed with the chip to perform the method for controlling the terminal to receive the information.

The embodiments of the present application provide a computer-readable storage medium to store a computer program that causes a computer to perform the method for controlling the terminal to receive the information.

The embodiments of the present application provide a computer program product including computer program instructions that cause a computer to perform the method for controlling the terminal to receive the information.

The embodiments of the present application provide a computer program, which when running on a computer, causes the computer to perform the method for controlling the terminal to receive the information.

Based on the above technical solutions, on one hand, a network side can control activation or deactivation of a wake-up function (that is, WUS function). On the other hand, a terminal can also autonomously control the activation or deactivation of the wake-up function. Therefore, the terminal can effectively receive a first PDCCH having the wake-up function, and an energy-saving gain can be achieved to the greatest extent.

### BRIEF DESCRIPTION OF THE DRAWINGS

The drawings described here are used to provide a further understanding of the present application and constitute a part of the present application. The exemplary embodiments and descriptions of the present application are used to explain the present application and do not constitute an improper limitation of the present application. In the drawings:
FIG. 1 is a schematic diagram of a communication system architecture according to an embodiment of the present application.
FIG. 2 is a schematic diagram of a DRX cycle according to an embodiment of the present application.
FIG. 3 is a schematic flowchart of a method for controlling a terminal to receive information according to an embodiment of the application.
FIG. 4-1 is a first schematic diagram of an MAC CE according to an embodiment of the present application.
FIG. 4-2 is a second schematic diagram of an MAC CE according to an embodiment of the present application.
FIG. 5 is a schematic structural composition diagram of an apparatus for controlling a terminal to receive information according to an embodiment of the application.
FIG. 6 is a schematic structural diagram of a communication device according to an embodiment of the present application.
FIG. 7 is a schematic structural diagram of a chip according to an embodiment of the present application.
FIG. 8 is a schematic structural diagram of a communication system according to an embodiment of the present application.

### DETAILED DESCRIPTION OF ILLUSTRATED EMBODIMENTS

The technical solutions in the embodiments of the present application will be described below in conjunction with the drawings in the embodiments of the present application. Obviously, the described embodiments are part of the embodiments of the present application, not all of the embodiments. Based on the embodiments in the present application, all other embodiments obtained by those of ordinary skill in the art without creative work should fall within a protection scope of the present application.

The technical solutions of the embodiments of the present disclosure can be applied to various communication systems, such as a global system of mobile communication (GSM) system, a code division multiple access (CDMA) system, a wideband code division multiple access (WCDMA) system, a general packet radio service (GPRS), a long term evolution (LTE) system, a LTE frequency division duplex (FDD) system, a LTE time division duplex (TDD) system, an universal mobile telecommunication system (UMTS), a global interoperability for microwave access (WiMAX) communication system, or a 5G system, etc.

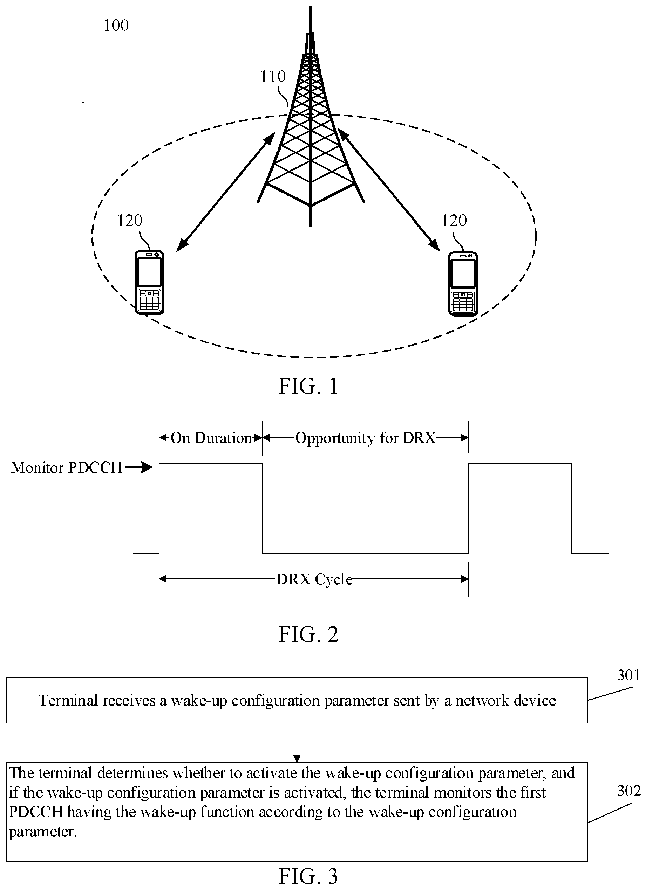

Exemplarily, a communication system 100 according to the embodiments of the present application is illustrated in FIG. 1. The communication system 100 may include a network device 110, and the network device 110 may be a device communicating with a terminal device 120 (or called a communication terminal or a terminal). The network device 110 may provide communication coverage for a specific geographical region and may communicate with a terminal device under the coverage. Optionally, the network device may be a base transceiver station (BTS) in the GSM or in the CDMA system, or may be a NodeB (NB) in the WCDMA system, or may be an evolutional Node B (eNB or eNodeB) in the LTE system, or a radio controller in a cloud radio access network (CRAN). Alternatively, the network device may be a mobile switching center, a relay station, an access point, a vehicle device, a wearable device, a hub, a switch, a network bridge, a router, a network-side device in a future 5G network, or a network device in a future evolved public land mobile network (PLMN), etc.

The communication system 100 further includes at least one terminal device 120 located within the coverage area of the network device 110. A "terminal device" used herein includes, but not limited to, a device arranged to receive/send a communication signal through a wired line connection, for example, through public switched telephone network (PSTN), digital subscriber line (DSL), digital cable and direct cable connections, and/or another data connection/network, and/or through a wireless interface, for example, for a cellular network, a wireless local area network (WLAN), a digital television network like a digital video broadcasting-handheld (DVB-H) network, a satellite network and an amplitude modulated (AM)-frequency modulated (FM) broadcast transmitter, and/or another communication terminal, and/or an internet of things (IoT) device. The terminal device arranged to communicate through a wireless interface may be called a "wireless communication terminal", a "wireless terminal" or a "mobile terminal." Examples of a mobile terminal include, but not limited to, a satellite or cellular telephone, a personal communication system (PCS) terminal capable of combining a cellular radio telephone and data processing, faxing and data communication capabilities, a personal digital assistant (PDA) capable of including a radio telephone, a pager, Internet/intranet access, a web browser, a notepad, a calendar and/or a global positioning system (GPS) receiver, and a conventional laptop and/or palmtop receiver or another electronic device including a radio telephone transceiver. The terminal device may refer to an access terminal, UE, a user unit, a user station, a mobile station, a mobile radio station, a remote station, a remote terminal, a mobile device, a user terminal, a terminal, a wireless communication device, a user agent or a user device. The access terminal may be a cell phone, a cordless phone, a session initiation protocol (SIP) phone, a wireless local loop (WLL) station, a PDA, a handheld device with a wireless communication function, a computing device, another processing device connected to a wireless modem, a vehicle device, a wearable device, a terminal device in the 5G network, a terminal device in the future evolved PLMN, etc.

Optionally, device to device (D2D) communication may be performed between terminal devices 120.

Optionally, the 5G system or the 5G network may also be called an NR system or an NR network.

One network device and two terminal devices are exemplarily illustrated in FIG. 1. Optionally, the communication system 100 may include multiple network devices and other numbers of terminal devices may be included in coverage of each network device. There is no limit made thereto in the embodiments of the present application.

Optionally, the communication system 100 may further include other network entities such as a network controller and a mobility management entity (MME). There is no limit made thereto in the embodiments of the present application.

It is to be understood that a device with a communication function in the network/system in the embodiments of the present application may be called a communication device. For example, for the communication system 100 illustrated in FIG. 1, communication devices may include the network device 110 and terminal device 120 with the communication function, and the network device 110 and the terminal device 120 may be the specific devices mentioned above and will not be elaborated herein. The communication devices may further include other devices in the communication system 100, for example, other network entities like a network controller and a mobility management entity. There is no limit made thereto in the embodiments of the present application.

It is to be understood that terms "system" and "network" in the present application may usually be exchanged in the present application. In the present application, term "and/or: is only an association for describing associated objects and represents that three relationships may exist. For example, A and/or B may represent three conditions: i.e., independent existence of A, existence of both A and B and independent existence of B. In addition, character "/" in the present application usually represents that previous and next associated objects form an "or" relationship.

In order to facilitate the understanding of the technical solutions of the embodiments of the present application, the related technologies of the embodiments of the present application are described below.

Terminal battery life is an important aspect of user experience, therefore it is very important to study terminal power consumption to improve terminal power usage efficiency. International telecommunication union-radiocommunication group standardization organization (ITU-Radiocommunications sector, ITU-R) defines energy efficiency as a minimum technical performance requirement of IMT-2020. According to a ITU-R report, equipment energy efficiency can support two aspects, 1) effective data transmission in overload scenarios, and 2) low energy consumption without data transmission. The effective data transmission in the overload scenario can be expressed as the average spectral efficiency, and the low power consumption without data transmission scenario can be expressed as a sleep ratio.

The NR system can support high-speed data transmission, and business data can be bursty and served in a short time. Therefore, an effective terminal energy-saving mechanism can trigger the terminal to enter a network access mode from an energy-saving mode, and therefore, it can also enter the energy-saving mode from the network access mode (for example, when there is no data transmission). Therefore, a dynamic conversion is needed.

The power consumption of the access network needs to be considered, which is a main scenario of power consumption. Therefore, a terminal power consumption scheme should be able to dynamically adapt to different data transmissions, and dynamically adapt to services in different dimensions, such as carrier, antenna, beam, bandwidth, etc. In addition, an enhancement of a conversion between the access network mode and the energy-saving mode also needs to be considered, whether it is a network-assisted solution or a terminal-assisted solution.

The terminal also consumes a lot of power in terms of radio resource management (RRM). For example, a stationary terminal does not need to measure as frequently as a mobile terminal. The network side can provide signaling to assist the terminal to reduce unnecessary measurements. The terminal can provide some auxiliary information to the network side.

In R15 LTE NB-IOT, WUS technology is introduced for energy saving of NB-IOT terminals. The WUS technology is applied to save energy in a paging reception process of NB-IOT terminals. Specifically, the network side configures WUS configuration parameter through a system broadcast. For a terminal that uses discontinuous reception (DRX), the terminal detects a WUS signal before each paging occasion (PO). If the WUS signal is detected, the terminal tries to receive a paging message, otherwise the terminal does not receive the paging message. For the terminal using eDRX, the terminal detects the WUS signal before the PO. If the WUS signal is detected, the terminal obtains the paging message in consecutive numPOs POs or until the paging message is received.

In R16 NR systems, a similar mechanism of LTE WUS is also introduced, and it is used in conjunction with DRX to achieve energy-saving performances. The difference between NR WUS and LTE WUS is that WUS in NR is PDCCH.

On the other hand, packet-based data streams are usually bursty, with data transmission for a period of time, but no data transmission for a longer period of time. When there is no data transmission, the terminal can stop receiving PDCCH (a blind PDCCH detection will be stopped at this time) to reduce power consumption, thereby increasing battery life. This is the origin of DRX.

The basic mechanism of DRX is to configure a DRX cycle for the terminal in an RRC connection (RRC_CONNECTED) state. As illustrated in FIG. 2, the DRX cycle consists of "on duration" and "opportunity for DRX". During the "on duration" period, the terminal monitors and receives the PDCCH (on duration is also called an activation period). During the "DRX" time, the terminal does not receive the PDCCH to reduce power consumption (opportunity for DRX is also called a dormant period). It should be noted that in time domain, time is divided into successive DRX cycles.

In the discussion of WUS in R16, the mainstream tends to use PDCCH as WUS. The network side may always send the PDCCH for WUS function to the terminal before the on duration of the DRX cycle (the following embodiments of the present application are referred to as a first PDCCH having a wake-up function). A field carried by the PDCCH indicates whether the terminal needs to wake up during a next on duration. However, since the terminal wakes up or not is not only related to the on duration timer and DRX cycle, but also related to some other timers, such as drx-InactivityTimer, HARQ RTT timer, drx-RetransmissionTimer, the actual waking time of the terminal depends on a result of the combined action of the timers. On the other hand, when terminal services are frequent, the terminal will not enter a sleep state, therefore, the network side does not need to issue the PDCCH for WUS to the terminal at this time, and the terminal does not need to receive the PDCCH for WUS, otherwise the terminal may waste more power. Therefore, a mechanism is needed to control the terminal to reasonably receive the PDCCH functioned by WUS in order to achieve a maximum energy-saving gain. To this end, the following technical solutions of the embodiments of the present application are proposed.

FIG. 3 is a schematic flowchart of a method for controlling a terminal to receive information according to an embodiment of the present application. As illustrated in FIG. 3, the method for controlling the terminal to receive information includes the following steps:

Step 301: a terminal receives a wake-up configuration parameter sent by a network device.

In the embodiments of the present application, the terminal may be any device capable of communicating with a network, such as a mobile phone, a tablet computer, a notebook, a vehicle-mounted terminal, and a wearable device.

In the embodiments of the present application, the network device may be a base station, such as an NR base station (i.e., gNB), an LTE base station (i.e., eNB), etc.

In the embodiments of the present application, the terminal receives a DRX configuration parameter and the wake-up configuration parameter sent by the network device, and the wake-up configuration parameter here may also be referred to as a WUS configuration parameter. Further, the DRX configuration parameter has an association relationship with the wake-up configuration parameter. The terminal determines a first time period in a DRX cycle based on the DRX configuration parameter, and the first time period refers to a time period during which a PDCCH needs to be monitored. The first PDCCH having the wake-up function is located before the first time period.

The DRX configuration parameter is used by the terminal to determine the DRX cycle illustrated in FIG. 2. The DRX cycle consists of "on duration" and "opportunity for DRX". During the "on duration" time, the terminal monitors and receives the PDCCH. During the "opportunity for DRX" time, the terminal does not receive the PDCCH to reduce power consumption. In the embodiments of the present application, the on duration time is referred to as the first time period in the DRX cycle, and the opportunity for DRX time is referred to as a second time period in the DRX cycle.

The wake-up configuration parameter is used by the terminal to determine the PDCCH for WUS (referred to as the first PDCCH having the wake-up function in the embodiments of the present application). Specifically, the wake-up configuration parameter includes at least one of the followings:

A first radio network temporary identifier (RNTI), wherein the first RNTI is an RNTI for the terminal or a terminal group (that is, the first RNTI is the RNTI of per UE or per UE group), and the first RNTI is used to scramble the first PDCCH having the wake-up function.

A first index information, wherein the first index information is an index of the terminal in the terminal group, and the first index information is used to correlate an activation and/or deactivation indication information of the terminal in the first PDCCH having the wake-up function.

A configuration indication information of the wake-up configuration parameter.

A time-frequency resource configuration information of the first PDCCH, wherein the time-frequency resource configuration information includes a frequency configuration information and a time configuration information. In an example, the time configuration information includes a first time offset, and the first time offset refers to a time offset between a search space in which the first PDCCH is located and a first time period in a related DRX cycle.

An initial activation and/or deactivation indication information of the wake-up configuration parameter.

Here, the time-frequency resource configuration information of the first PDCCH includes time configuration information and frequency configuration information of the first PDCCH. The time configuration information of the first PDCCH includes a first time offset, and the first time offset refers to the time offset between a search space where the first PDCCH is located and the first time period in the related DRX cycle offset. In a specific implementation, a parameter offset (i.e., the first time offset) can be defined in the configuration of the search space. This offset is the offset of the search space relative to the first time period (i.e., on duration). Further, the offset of the search space relative to the first time period is as follows:

1) The offset between a start time of the search space and an end time of the first time period.

2) The offset between the start time of the search space and a start time of the first time period.

3) The offset between an end time of the search space and the start time of the first time period.

4) The offset between the end time of the search space and the end time of the first time period.

The configuration of the search space where the first PDCCH is located may include any one or more of the above offsets.

It should be noted that the network device can configure one or more sets of DRX configuration parameters for the terminal, and each set of DRX configuration parameters can be associated with a set of wake-up configuration parameters, that is, there is an association relationship between the DRX configuration parameters and the wake-up configuration parameters.

In an embodiment, the network device can configure the DRX configuration parameter and the wake-up configuration parameter for the terminal through a dedicated RRC signaling.

Step 302: The terminal determines whether to activate the wake-up configuration parameter, and if the wake-up configuration parameter is activated, the terminal monitors the first PDCCH having the wake-up function according to the wake-up configuration parameter.

In the embodiments of the present application, after receiving the DRX configuration parameter, the terminal activates the DRX configuration parameter. After the terminal receives the wake-up configuration parameter, the terminal can activate the wake-up configuration parameter in any of the followings:

Manner 1: After the terminal receives the wake-up configuration parameter, the terminal immediately activates the wake-up configuration parameter.

It should be noted that after the wake-up configuration parameter is activated, the wake-up configuration parameter becomes effective, and the terminal can use the wake-up configuration parameter.

Manner 2: If the terminal determines that a terminal signal quality is greater than or equal to a first threshold value, the terminal activates the wake-up configuration parameter.

Here, the terminal signal quality includes a reference signal received power (RSRP) and/or a reference signal received quality (RSRQ). Correspondingly, the first threshold value includes the RSRP threshold value and/or the RSRQ threshold value.

Specifically, when the network side configures the wake-up configuration parameter for the terminal, the first threshold value is also configured. When the terminal signal quality is greater than or equal to the first threshold value, the terminal autonomously activates the wake-up configuration parameter.

Manner 3: After the terminal receives the wake-up configuration parameter, the wake-up configuration parameter is in an inactive state; after the terminal receives the first indication information sent by the network device, the wake-up configuration parameter is activated.

Here, the first indication information is carried in an RRC message, a MAC CE, or a PDCCH.

Here, the first indication information may also be referred to as an activation indication information, and the terminal activates the wake-up configuration parameter only after receiving the activation indication information sent by the network device.

In a specific implementation, if a service of the terminal is not active, the network device can issue the activation indication information of the WUS function to the terminal. After receiving the activation indication information of the WUS function, the terminal monitors the first PDCCH (that is, the PDCCH used by WUS). The terminal determines whether to monitor the PDCCH within the associated on duration time period (that is, whether to start a DRX on duration timer) according to a monitoring result of the first PDCCH. Here, how the network device determines whether to issue the activation instruction information of the WUS function depends on the implementation of the network side. If the network device decides to issue the activation indication information of the WUS function, the network device needs to send the first PDCCH (that is, the PDCCH used by WUS) to the terminal.

Manner 4: The terminal reports a cell signal quality or a measurement report triggered by a measurement event to the network device, and the network device determines whether to deliver the first indication information to the terminal according to the cell signal quality or the measurement report; if the terminal receives the first indication information sent by the network device, the terminal activates the wake-up configuration parameter.

Here, the first indication information is carried in the RRC message, the MAC CE, or the PDCCH.

In a specific implementation, the network device configures a measurement event for the terminal, and when a threshold is met, the terminal reports the measurement result to the network device, and the network device issues the first indication information according to the measurement result reported by the terminal. Here, the first indication information may also be referred to as activation indication information, and the terminal activates the wake-up configuration parameter only after receiving the activation indication information sent by the network device.

In the above solution, the activation of the wake-up configuration parameter may also be referred to as the activation of the WUS function.

In the embodiments of the present application, when the wake-up configuration parameter is in an active state, the wake-up configuration parameter can be deactivated in any of the followings:

Manner A) If the terminal determines that the terminal signal quality is less than the first threshold value, the terminal deactivates the wake-up configuration parameter.

Here, the terminal signal quality includes RSRP and/or RSRQ. Correspondingly, the first threshold value includes the RSRP threshold value and/or the RSRQ threshold value.

Specifically, when the terminal signal quality is less than the first threshold value, the terminal autonomously deactivates the wake-up configuration parameter.

Manner B) If the terminal receives a second indication information sent by the network device, the terminal deactivates the wake-up configuration parameter.

Here, the second indication information is carried in the RRC message, MAC CE, or the PDCCH.

Here, the second indication information may also be referred to as a deactivation indication information. After receiving the deactivation indication information sent by the network device, the terminal deactivates the wake-up configuration parameter.

In a specific implementation, if the terminal's business is active, the network device can issue a WUS function deactivation indication information to the terminal. After the terminal receives the WUS function deactivation indication information, the terminal will no longer monitor the first PDCCH (that is, the PDCCH used by WUS). A DRX behavior of the terminal is consistent with a traditional DRX behavior (that is, the PDCCH is monitored during the on duration time period). Here, how the network device determines whether to issue the deactivation instruction information of the WUS function depends on the implementation of the network side. If the network device decides to issue the deactivation indication information of the WUS function, the network device no longer sends the first PDCCH (that is, the PDCCH used by WUS) to the terminal.

Manner C) The terminal reports a cell signal quality or a measurement report triggered by a measurement event to the network device, and the network device determines whether to deliver a second indication information to the terminal according to the cell signal quality or the measurement report; if the terminal receives the second indication information sent by the network device, the terminal deactivates the wake-up configuration parameter.

In the embodiments of the present application, in the case where the wake-up configuration parameter is in an active state, the terminal monitors the first PDCCH having wake-up function before the first time period. If the terminal monitors the first PDCCH, or the terminal monitors the first PDCCH and a first information field in the first PDCCH indicates that the terminal monitors the PDCCH within the first time period, the terminal monitors the PDCCH in the first time period according to the DRX configuration parameter. Further, if the terminal does not monitor the first PDCCH, or the terminal monitors the first PDCCH and the first information field in the first PDCCH indicates that the terminal does not monitor the PDCCH in the first time period, then the terminal does not monitor the PDCCH in the first time period.

In the embodiment of the present application, when the wake-up configuration parameter is in the deactivated state, the terminal does not monitor the first PDCCH having wake-up function before the first time period; the terminal monitors the PDCCH in the first time period according to the DRX configuration parameter.

In the above solutions, the terminal monitoring the PDCCH in the first time period means that the terminal starts the DRX on duration timer (drx-ondurationTimer). The fact that the terminal does not monitor the PDCCH in the first time period, which means that the terminal does not start the DRX on duration timer (drx-ondurationTimer).

In the embodiments of the present application, the above-mentioned first indication information (the activation indication information) and the second indication information (the deactivation indication information) may be carried in the RRC message, the MAC control element (MAC CE), the PDCCH.

### 1) For MAC CE:

I) The MAC CE carries a first logical channel identifier, and the first logical channel identifier is used to indicate activation or deactivation of the wake-up configuration parameter.

Here, a new logical channel identify (LCID) can be defined to identify the activation of WUS MAC CE or the deactivation of WUS MAC CE.

Specifically, if a WUS function of a current terminal is in an activated state, when the terminal receives a MAC CE header information corresponding to the LCID, it is considered to deactivate the WUS function. If the WUS function of the current terminal is in the deactivated state, when the terminal receives the MAC CE header information corresponding to the LCID, it is considered that the WUS function is activated.

II) The MAC CE carries a first logical channel identifier and a second logical channel identifier, the first logical channel identifier is used to indicate activation of the wake-up configuration parameter, and the second logical channel identifier is used to indicate deactivation of the wake-up configuration parameter.

Here, two new LCIDs can be defined to respectively identify the activation of WUS MAC CE or the deactivation of WUS MAC CE.

Specifically, if the terminal receives the MAC CE header information corresponding to the first LCID, it is considered that the WUS function is activated. If the terminal receives the MAC CE header information corresponding to the second LCID, it is considered to deactivate the WUS function.

III) The MAC CE carries a second information field, and the value of the second information field is used to indicate activation or deactivation of the wake-up configuration parameter.

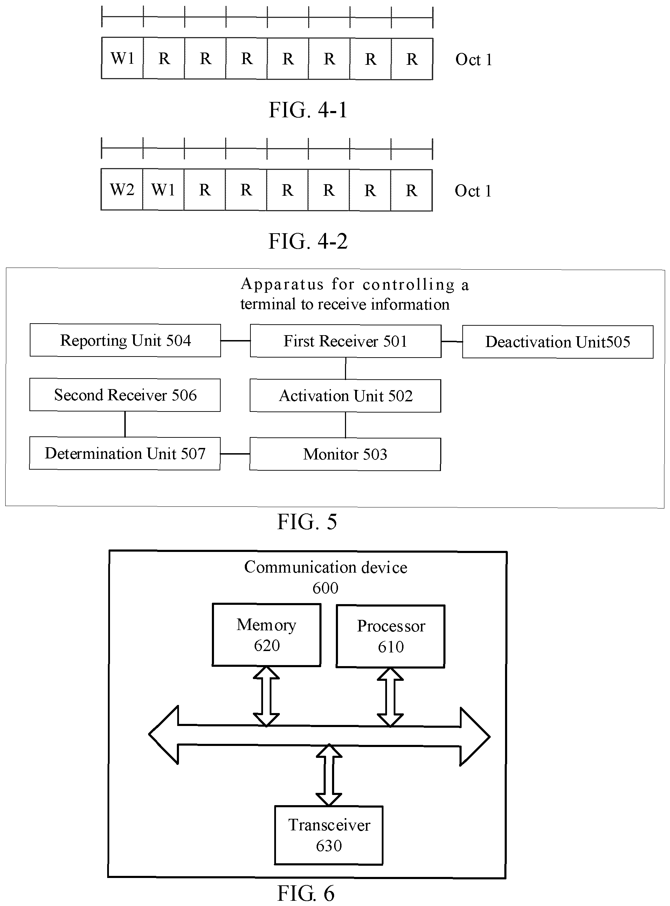

Here, a new field (that is, the second information field) can be defined to identify the activation of WUS MAC CE or the deactivation of WUS MAC CE. As illustrated in FIG. 4-1, W1 is set to 1 to activate the WUS function, and W1 is set to 0 to deactivate the WUS function. FIG. 4-1 illustrates a possible example, and the position of W1 is not limited to the position illustrated in FIG. 4-1.

Further, if the terminal is configured with multiple sets of DRX configuration parameters, it needs to control the activation/deactivation of the WUS function of each set of DRX. As illustrated in FIG. 4-2, W1 and W2 are respectively the activation/deactivation indication information of the WUS function corresponding to the two sets of DRX configuration parameters. FIG. 4-2 illustrates a scenario of two sets of DRX configuration parameters, and the technical solutions of the embodiments of the present application are not limited to a scenario of two sets of DRX configuration parameters.

### 2) For RRC message or PDCCH:

If a set of DRX configuration parameters is configured, the corresponding WUS function activation/deactivation indication information is configured for the set of DRX configuration parameters. If multiple sets of DRX configuration parameters are configured, the corresponding WUS function activation/deactivation indication information can be configured for each set of DRX configuration parameters, or multiple sets of DRX configuration parameters can be configured separately through multiple bits in a bitmap respectively corresponding to the activation/deactivation instruction information of the WUS function.

FIG. 5 is a schematic structural composition diagram of an apparatus for controlling a terminal to receive information according to an embodiment of the application. The apparatus for controlling the terminal to receive the information is applied to the terminal. As illustrated in FIG. 5, the apparatus for controlling the terminal to receive the information includes: a first receiver 501 configured to receive a wake-up configuration parameter sent by a network device, an activation unit 502 configured to determine whether to activate the wake-up configuration parameter, and a monitor 503, if the activation unit activates the wake-up configuration parameter, the monitor monitors a first PDCCH having a wake-up function according to the wake-up configuration parameter.

In an embodiment, the activation unit 502 immediately activates the wake-up configuration parameter after the first receiver 501 receives the wake-up configuration parameter.

In an embodiment, if the terminal determines that a terminal signal quality is greater than or equal to a first threshold value, the activation unit 502 activates the wake-up configuration parameter.

In an embodiment, after the first receiver 501 receives the wake-up configuration parameter, the wake-up configuration parameter is in an inactive state; and after the first receiver 501 receives a first indication information sent by the network device, the activation unit 502 activates the wake-up configuration parameter.

In an embodiment, the apparatus further includes: a reporting unit 504 configured to report a cell signal quality or a measurement report triggered by a measurement event to the network device, and the network device configured to determine whether to deliver the first indication information to the terminal according to the cell signal quality or the measurement report; if the first receiver 501 receives the first indication information sent by the network device, the activation unit 502 activates the wake-up configuration parameter.

In an embodiment, the first indication information is carried in an RRC message, a MAC CE, or a PDCCH.

In an embodiment, the apparatus further includes a deactivation unit 505.

When the wake-up configuration parameter is in an active state, if the terminal determines that the terminal signal quality is less than a first threshold, the deactivation unit 505 deactivates the wake-up configuration parameter.

In an embodiment, the apparatus further includes a deactivation unit 505.

When the wake-up configuration parameter is in an active state, if the first receiver 501 receives a second indication information sent by the network device, the deactivation unit 505 deactivates the wake-up configuration parameter.

In an embodiment, the apparatus further includes a reporting unit 504 and a deactivation unit 505.

The reporting unit 504 is configured to report a cell signal quality or a measurement report triggered by a measurement event to the network device, and the network device is configured to determine whether to deliver a second indication information to the terminal according to the cell signal quality or the measurement report.

If the first receiver 501 receives the second indication information sent by the network device, the deactivation unit 505 deactivates the wake-up configuration parameter.

In an embodiment, the second indication information is carried in an RRC message, a MAC CE, or a PDCCH.

In an embodiment, the wake-up configuration parameter includes at least one of the followings:

A first RNTI, wherein the first RNTI is an RNTI for the terminal or a terminal group, and the first RNTI is used to scramble the first PDCCH having the wake-up function.

A first index information, wherein the first index information is an index of the terminal in the terminal group, and the first index information is used to correlate an activation and/or deactivation indication information of the terminal in the first PDCCH having the wake-up function.

A time-frequency resource configuration information of the first PDCCH, wherein a time configuration information comprises a first time offset, and the first time offset refers to a time offset between a search space in which the first PDCCH is located and a first time period in a related DRX cycle.

An initial activation and/or deactivation indication information of the wake-up configuration parameter.

In an embodiment, the apparatus further includes: a second receiver 506 configured to receive a DRX configuration parameter sent by the network device, wherein the DRX configuration parameter and the wake-up configuration parameter have an association relationship; and a determination unit 507 configured to determine a first time period in a DRX cycle based on the DRX configuration parameter, wherein the first time period refers to a time period during which a PDCCH needs to be monitored; wherein the first PDCCH having the wake-up function is located before the first time period.

In an embodiment, when the wake-up configuration parameter is in an active state, the monitor 503 is configured to monitor the first PDCCH having the wake-up function before the first time period; and if the monitor monitors the first PDCCH, or the monitor monitors the first PDCCH and a first information field in the first PDCCH indicates that the monitor monitors the PDCCH within the first time period, the monitor monitors the PDCCH in the first time period according to the DRX configuration parameter.

In an embodiment, if the monitor 503 does not monitor the first PDCCH, or the monitor 503 monitors the first PDCCH and the first information field in the first PDCCH indicates that the monitor 503 does not monitor the PDCCH in the first time period, the monitor 503 does not monitor the PDCCH in the first time period.

In an embodiment, when the wake-up configuration parameter is in a deactivated state, the monitor 503 does not monitor the first PDCCH having the wake-up function before the first time period; and the monitor 503 monitors the PDCCH in the first time period according to the DRX configuration parameter.

In an embodiment, the MAC CE carries a first logical channel identifier, and the first logical channel identifier is used to indicate activation or deactivation of the wake-up configuration parameter.

In an embodiment, the MAC CE carries a first logical channel identifier and a second logical channel identifier, the first logical channel identifier is used to indicate activation of the wake-up configuration parameter, and the second logical channel identifier is used to indicate deactivation of the wake-up configuration parameter.

In an embodiment, the MAC CE carries a second information field, and a value of the second information field is used to indicate activation or deactivation of the wake-up configuration parameter.

Those skilled in the art should understand that the relevant description of the foregoing apparatus for controlling the terminal to receive the information in the embodiments of the present application can be understood with reference to the relevant description of the method for controlling the terminal to receive the information in the embodiments of the present application.

FIG. 6 is a schematic structural diagram of a communication device 600 according to an embodiment of the present application. As illustrated in FIG. 6, the communication device 600 can further include a processor 610. The processor 610 can invoke and execute the computer programs stored in the memory to perform the method provided in implementations.

Optionally, as illustrated in FIG. 6, the communication device 600 may further include a memory 620. The processor 610 can call and run a computer program from the memory 620 to implement the method in the embodiments of the present application.

The memory 620 may be a separate device independent of the processor 610, or may be integrated into the processor 610.

As illustrated in FIG. 6, the communication device 600 can further include a transceiver 630. The processor 610 can control the transceiver 630 to communicate with other devices, for example, to send information or data to other devices, or to receive information or data from other devices.

The transceiver 630 may include a transmitter and a receiver. The transceiver 630 may further include an antenna, where one or more antennas can be provided.

The communication device 600 may be the network device of implementations, and the communication device 600 can implement the operations performed by the network device described in the foregoing method implementations, which will not be repeated herein for the sake of simplicity.

Alternatively, the communication device 600 may be the mobile terminal/terminal of implementations, and the communication device 600 can implement the operations performed by the mobile terminal/terminal described in the foregoing method implementations, which will not be repeated herein for the sake of simplicity.

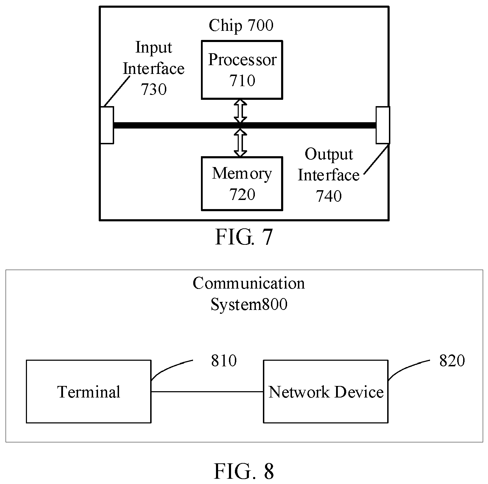

FIG. 7 is a schematic structural diagram of a chip according to implementations. As illustrated in FIG. 7, a chip 700 includes a processor 710. The processor 710 is configured to invoke and execute computer programs stored in a memory to perform the method provided in implementations.

As illustrated in FIG. 7, the chip 700 further includes a memory 720. The processor 710 can invoke and execute the computer programs stored in the memory 720 to perform the method provided in implementations.

The memory 720 may be a separate device independent of the processor 710 or may be integrated into the processor 710.

The chip 700 may further include an input interface 730. The processor 710 can control the input interface 730 to communicate with other devices or chips, for example, to acquire information or data sent by other devices or chips.

The chip 700 may further include an output interface 740. The processor 710 can control the output interface 740 to communicate with other devices or chips, for example, to output information or data to other devices or chips.

The chip is applicable to the network device of implementations. The chip can implement the operations performed by the network device described in the foregoing method implementations, which will not be repeated herein for the sake of simplicity.

Alternatively, the chip is applicable to the mobile terminal/terminal of implementations. The chip can implement the operations performed by the mobile terminal/terminal described in the foregoing method implementations, which will not be repeated herein for the sake of simplicity.

It should be understood that, the chip herein may also be referred to as a system-on chip (SOC).

FIG. 8 is a schematic block diagram of a communication system 800 according to implementations. As illustrated in FIG. 8, the communication system 800 includes a terminal 810 and a network device 820.

The terminal 810 can implement functions of the method which are implemented by a terminal. The network device 820 can implement functions of the method which are implemented by a network device, which will not be repeated herein for the sake of simplicity.

The processor referred to herein may be an integrated circuit chip with signal processing capabilities. During implementation, each step of the foregoing method may be completed by an integrated logic circuit in the form of hardware or an instruction in the form of software in the processor. The processor may be a general-purpose processor, a digital signal processor (DSP), an application specific integrated circuit (ASIC), a field programmable gate array (FPGA), or other programmable logic devices, discrete gates or transistor logic devices, or discrete hardware components, which can implement or execute the methods, steps, and logic blocks disclosed in implementations. The general purpose processor may be a microprocessor, or the processor may be any conventional processor or the like. The steps of the method disclosed in implementations may be implemented through a hardware decoding processor or may be performed by hardware and software modules in the decoding processor. The software module can be located in a storage medium such as a random-access memory (RAM), a flash memory, a read only memory (ROM), a programmable ROM (PROM), or an electrically erasable programmable memory, registers, and the like. The storage medium is located in the memory. The processor reads the information in the memory and completes the steps of the method described above with the hardware of the processor.

It can be understood that, the memory according to implementations may be a volatile memory or a non-volatile memory, or may include both the volatile memory and the non-volatile memory. The non-volatile memory may be a ROM, a PROM, an erasable programmable read only memory (erasable PROM, EPROM), an electrically erasable programmable read only memory (electrically EPROM, EEPROM), or a flash memory. The volatile memory can be a RAM that acts as an external cache. By way of explanation rather than limitation, many forms of RAM are available, such as a static RAM (SRAM), a dynamic RAM (DRAM), a synchronous DRAM (SDRAM), a double data rate SDRAM (DDR SDRAM), an enhanced SDRAM (ESDRAM), a synchronous link dynamic random-access memory (synch-link DRAM, SLDRAM), and a direct rambus RAM (DR RAM). The memory of the systems and methods described herein is intended to include, but is not limited to, these and any other suitable types of memory.

It should be understood that, the above description of the memory is intended for illustration rather than limitation. For example, the memory of implementations may also be an SRAM, a DRAM, an SDRAM, a DDR SDRAM, an ESDRAM, an SLDRAM, a DR RAM, etc. In other words, the memory of implementations is intended to include, but is not limited to, these and any other suitable types of memory.

The embodiments of the present application also provide a computer readable storage medium for storing a computer program.

Optionally, the computer readable storage medium may be applied to the network device in the embodiments of the present application, and the computer program causes a computer to perform the corresponding processes implemented by the network device in the methods of the embodiments of the present application, which will not be repeated here for the sake of brevity.

Optionally, the computer readable storage medium may be applied to the mobile terminal/terminal in the embodiments of the present application, and the computer program causes the computer to perform the corresponding processes implemented by the mobile terminal/terminal in the methods of the embodiments of the present application, which will not be repeated here for the sake of brevity.

The embodiments of the present application also provide a computer program product, including computer program instructions.

Optionally, the computer program product can be applied to the network device in the embodiments of the present application, and the computer program instructions cause the computer to perform the corresponding processes implemented by the network device in the methods according to the embodiments of the present application, which will not be repeated here for the sake of brevity.

Optionally, the computer program product can be applied to the mobile terminal/terminal in the embodiments of the present application, and the computer program instructions cause the computer to perform the corresponding processes implemented by the mobile terminal/terminal in the methods according to the embodiments of the present application, which will not be repeated here for the sake of brevity.

The embodiments of the present application also provide a computer program. Optionally, the computer program can be applied to the network device in the embodiments of the present application. When running on a computer, the computer program causes a computer to perform the corresponding processes implemented by the network device in the methods of the embodiments of the present application, which will not be repeated here for the sake of brevity.

Optionally, the computer program can be applied to the mobile terminal/terminal in the embodiments of the present application. When running on a computer, the computer program causes the computer to perform the corresponding processes implemented by the mobile terminal/terminal in the methods of the embodiments of the present application, which will not be repeated here for the sake of brevity.

Those of ordinary skill in the art can recognize that the exemplary units and algorithm steps described in connection with the embodiments disclosed herein can be implemented in electronic hardware or a combination of computer software and the electronic hardware. Whether these functions are implemented in hardware or software depends on the specific applications of the technical solutions and design constraints. Various methods can be used by professional technicians to implement the described functions for each specific application, and such implementations should not be considered as going beyond the scope of the present disclosure.

Those skilled in the art can clearly understand that for the convenience and conciseness of the description, for the specific operating process of the systems, devices and units described above, reference can be made to corresponding process in the foregoing method embodiments, which will not be repeated here.

According to the embodiments provided in the present application, it should be understood that the systems, devices, and methods disclosed can be implemented in other manners. For example, the device embodiments described above are merely illustrative. For example, the division of the units is only a logical function division, and in actual implementations, there can be other division manners. For example, a plurality of units or components can be combined or integrated into another system, or some features can be ignored or not implemented. In addition, the coupling or direct coupling or communication connection shown or discussed herein can also be indirect coupling or communication connection through some interfaces, devices or units, and can be in electrical, mechanical or other forms.

The units described as separate components may be or may not be physically separated, and the components shown as units may be or may not be physical units, that is, they may be located in one place or may be distributed on multiple network units. Some or all of the units can be selected to achieve the objectives of the solutions of the embodiments according to actual requirements.

In addition, the functional units in the embodiments of the present disclosure can be integrated into one processing unit, or each unit can individually exist physically, or two or more of the units can be integrated into one unit.

If implemented in the form of software functional units and sold or used as an independent product, the functions can be stored in a computer-readable storage medium. Based on such understanding, the technical solution of the present disclosure essentially, a part thereof that contributes to the prior art, or a part of the technical solution can be embodied in the form of a software product, and the computer software product is stored in a storage medium and includes instructions which enable a computer device (which may be a personal computer, a server, a network device or the like) to perform all or part of the steps of the methods described in the embodiments of the present disclosure. The foregoing storage medium includes various medium such as a USB drive, a removable hard disk, a ROM, a RAM, a magnetic disk or an optical disc that can store program codes.

Those described above are only specific implementations of the present disclosure, and the protection scope of the present disclosure is not limited thereto. Any alteration or replacement readily devised by a person skilled in the art within the technical scope disclosed in the present disclosure shall fall within the scope of the present disclosure. Therefore, the protection scope of the present disclosure shall be subject to the protection scope of the claims.

## Claims

1. A method for controlling a terminal to receive information, comprising:
a terminal receiving a wake-up configuration parameter sent by a network device;
the terminal determining whether to activate the wake-up configuration parameter; and if the terminal activates the wake-up configuration parameter, the terminal monitors a first PDCCH having a wake-up function according to the wake-up configuration parameter.

2. The method according to claim 1, wherein the terminal determining whether to activate the wake-up configuration parameter comprises:
the terminal immediately activates the wake-up configuration parameter after receiving the wake-up configuration parameter.

3. The method according to claim 1, wherein the terminal determining whether to activate the wake-up configuration parameter comprises:
if the terminal determines that a terminal signal quality is greater than or equal to a first threshold value, the terminal activates the wake-up configuration parameter.

4. The method according to claim 1, wherein the terminal determining whether to activate the wake-up configuration parameter comprises:
after the terminal receives the wake-up configuration parameter, the wake-up configuration parameter is in an inactive state;
after the terminal receives a first indication information sent by the network device, the terminal activates the wake-up configuration parameter.

5. The method according to claim 1, wherein the terminal determining whether to activate the wake-up configuration parameter comprises:
the terminal reporting a cell signal quality or a measurement report triggered by a measurement event to the network device, and the network device determining whether to deliver the first indication information to the terminal according to the cell signal quality or the measurement report;
if the terminal receives the first indication information sent by the network device, the terminal activates the wake-up configuration parameter.

6. The method according to claim 4 or 5, wherein the first indication information is carried in an RRC message, a MAC CE, or a PDCCH.

7. The method according to any one of claims 2 to 6, wherein when the wake-up configuration parameter is in an active state, the method further comprises:
if the terminal determines that the terminal signal quality is less than a first threshold, the terminal deactivates the wake-up configuration parameter.

8. The method according to any one of claims 2 to 6, wherein when the wake-up configuration parameter is in an active state, the method further comprises:
if the terminal receives a second indication information sent by the network device, the terminal deactivates the wake-up configuration parameter.

9. The method according to any one of claims 2 to 6, wherein when the wake-up configuration parameter is in an active state, the method further comprises:
the terminal reporting a cell signal quality or a measurement report triggered by a measurement event to the network device, and the network device determining whether to deliver a second indication information to the terminal according to the cell signal quality or the measurement report;
if the terminal receives the second indication information sent by the network device, the terminal deactivates the wake-up configuration parameter.

10. The method according to claim 8 or 9, wherein the second indication information is carried in an RRC message, a MAC CE, or a PDCCH.

11. The method according to any one of claims 1 to 10, wherein the wake-up configuration parameter comprises at least one of the followings:
a first RNTI, wherein the first RNTI is an RNTI for the terminal or a terminal group, and the first RNTI is used to scramble the first PDCCH having the wake-up function;
a first index information, wherein the first index information is an index of the terminal in the terminal group, and the first index information is used to correlate an activation and/or deactivation indication information of the terminal in the first PDCCH having the wake-up function;
a time-frequency resource configuration information of the first PDCCH, wherein a time configuration information comprises a first time offset, and the first time offset refers to a time offset between a search space in which the first PDCCH is located and a first time period in a related DRX cycle;
an initial activation and/or deactivation indication information of the wake-up configuration parameter.

12. The method according to any one of claims 1 to 11, further comprising:
the terminal receiving a DRX configuration parameter sent by the network device, wherein the DRX configuration parameter and the wake-up configuration parameter have an association relationship;
the terminal determining a first time period in a DRX cycle based on the DRX configuration parameter, wherein the first time period refers to a time period during which a PDCCH needs to be monitored; wherein the first PDCCH having the wake-up function is located before the first time period.

13. The method according to claim 12, wherein when the wake-up configuration parameter is in an active state, the method further comprises:
the terminal monitoring the first PDCCH having the wake-up function before the first time period;
if the terminal monitors the first PDCCH, or the terminal monitors the first PDCCH and a first information field in the first PDCCH indicates that the terminal monitors the PDCCH within the first time period, the terminal monitors the PDCCH in the first time period according to the DRX configuration parameter.

14. The method according to claim 13, further comprising:
if the terminal does not monitor the first PDCCH, or the terminal monitors the first PDCCH and the first information field in the first PDCCH indicates that the terminal does not monitor the PDCCH in the first time period, the terminal does not monitor the PDCCH in the first time period.

15. The method according to claim 12, wherein when the wake-up configuration parameter is in a deactivated state, the method further comprises:
wherein the terminal does not monitor the first PDCCH having the wake-up function before the first time period;
wherein the terminal monitors the PDCCH in the first time period according to the DRX configuration parameter.

16. The method according to claim 6 or 10, wherein the MAC CE carries a first logical channel identifier, and the first logical channel identifier is used to indicate activation or deactivation of the wake-up configuration parameter.

17. The method according to claim 6 or 10, wherein the MAC CE carries a first logical channel identifier and a second logical channel identifier, the first logical channel identifier is used to indicate activation of the wake-up configuration parameter, and the second logical channel identifier is used to indicate deactivation of the wake-up configuration parameter.

18. The method according to claim 6 or 10, wherein the MAC CE carries a second information field, and a value of the second information field is used to indicate activation or deactivation of the wake-up configuration parameter.

19. An apparatus for controlling a terminal to receive information, comprising:
a first receiver configured to receive a wake-up configuration parameter sent by a network device;
an activation unit configured to determine whether to activate the wake-up configuration parameter; and
a monitor, if the activation unit activates the wake-up configuration parameter, the monitor monitors a first PDCCH having a wake-up function according to the wake-up configuration parameter.

20. The apparatus according to claim 19, wherein the activation unit immediately activates the wake-up configuration parameter after the first receiver receives the wake-up configuration parameter.

21. The apparatus according to claim 19, wherein if the terminal determines that a terminal signal quality is greater than or equal to a first threshold value, the activation unit activates the wake-up configuration parameter.

22. The apparatus according to claim 19, wherein after the first receiver receives the wake-up configuration parameter, the wake-up configuration parameter is in an inactive state; and after the first receiver receives a first indication information sent by the network device, the activation unit activates the wake-up configuration parameter.

23. The apparatus according to claim 19, further comprising:
a reporting unit configured to report a cell signal quality or a measurement report triggered by a measurement event to the network device, and the network device configured to determine whether to deliver the first indication information to the terminal according to the cell signal quality or the measurement report;
if the first receiver receives the first indication information sent by the network device, the activation unit activates the wake-up configuration parameter.

24. The apparatus according to claim 22 or 23, wherein the first indication information is carried in an RRC message, a MAC CE, or a PDCCH.

25. The apparatus according to any one of claims 20 to 24, wherein the apparatus further comprises a deactivation unit;
when the wake-up configuration parameter is in an active state, if the terminal determines that the terminal signal quality is less than a first threshold, the deactivation unit deactivates the wake-up configuration parameter.

26. The apparatus according to any one of claims 20 to 24, wherein the apparatus further comprises a deactivation unit;
when the wake-up configuration parameter is in an active state, if the first receiver receives a second indication information sent by the network device, the deactivation unit deactivates the wake-up configuration parameter.

27. The apparatus according to any one of claims 20 to 24, wherein the apparatus further comprises a reporting unit and a deactivation unit;
the reporting unit configured to report a cell signal quality or a measurement report triggered by a measurement event to the network device, and the network device configured to determine whether to deliver a second indication information to the terminal according to the cell signal quality or the measurement report;
if the first receiver receives the second indication information sent by the network device, the deactivation unit deactivates the wake-up configuration parameter.

28. The apparatus according to claim 26 or 27, wherein the second indication information is carried in an RRC message, a MAC CE, or a PDCCH.

29. The apparatus according to any one of claims 19 to 28, wherein the wake-up configuration parameter comprises at least one of the followings:
a first RNTI, wherein the first RNTI is an RNTI for the terminal or a terminal group, and the first RNTI is used to scramble the first PDCCH having the wake-up function;
a first index information, wherein the first index information is an index of the terminal in the terminal group, and the first index information is used to correlate an activation and/or deactivation indication information of the terminal in the first PDCCH having the wake-up function;
a time-frequency resource configuration information of the first PDCCH, wherein a time configuration information comprises a first time offset, and the first time offset refers to a time offset between a search space in which the first PDCCH is located and a first time period in a related DRX cycle;
an initial activation and/or deactivation indication information of the wake-up configuration parameter.

30. The apparatus according to any one of claims 19 to 29, further comprising:
a second receiver configured to receive a DRX configuration parameter sent by the network device, wherein the DRX configuration parameter and the wake-up configuration parameter have an association relationship;
a determination unit configured to determine a first time period in a DRX cycle based on the DRX configuration parameter, wherein the first time period refers to a time period during which a PDCCH needs to be monitored; wherein the first PDCCH having the wake-up function is located before the first time period.

31. The apparatus according to claim 30, wherein when the wake-up configuration parameter is in an active state, the apparatus further comprises:
the monitor configured to monitor the first PDCCH having the wake-up function before the first time period; and if the monitor monitors the first PDCCH, or the monitor monitors the first PDCCH and a first information field in the first PDCCH indicates that the monitor monitors the PDCCH within the first time period, the monitor monitors the PDCCH in the first time period according to the DRX configuration parameter.

32. The apparatus according to claim 31, further comprising:
if the monitor does not monitor the first PDCCH, or the monitor monitors the first PDCCH and the first information field in the first PDCCH indicates that the monitor does not monitor the PDCCH in the first time period, the monitor does not monitor the PDCCH in the first time period.

33. The apparatus according to claim 30, wherein when the wake-up configuration parameter is in a deactivated state, the apparatus further comprises:
wherein the monitor does not monitor the first PDCCH having the wake-up function before the first time period;
wherein the monitor monitors the PDCCH in the first time period according to the DRX configuration parameter.

34. The apparatus according to claim 24 or 28, wherein the MAC CE carries a first logical channel identifier, and the first logical channel identifier is used to indicate activation or deactivation of the wake-up configuration parameter.

35. The apparatus according to claim 24 or 28, wherein the MAC CE carries a first logical channel identifier and a second logical channel identifier, the first logical channel identifier is used to indicate activation of the wake-up configuration parameter, and the second logical channel identifier is used to indicate deactivation of the wake-up configuration parameter.

36. The apparatus according to claim 24 or 28, wherein the MAC CE carries a second information field, and a value of the second information field is used to indicate activation or deactivation of the wake-up configuration parameter.

37. A terminal comprising a processor and a memory for storing a computer program, wherein the processor is configured to call and run the computer program stored in the memory to perform the method according to any one of claims 1 to 18.

38. A chip comprising a processor, wherein the processor is configured to call and run a computer program from a memory, to cause a device installed with the chip to perform the method according to any one of claims 1 to 18.

39. A computer-readable storage medium for storing a computer program that causes a computer to perform the method according to any one of claims 1 to 18.

40. A computer program product comprising computer program instructions that cause a computer to perform the method according to any one of claims 1 to 18.

41. A computer program that causes a computer to perform the method according to any one of claims 1 to 18.
